# FASCICULE DE BREVET EUROPEEN

(11) **EP 2 953 763 B1**
(45) Date de publication et mention de la délivrance du brevet: **19.10.2016**
(21) Numéro de dépôt: 14713253.4
(22) Date de dépôt: 11.02.2014
(51) Int. Cl.: B23K 26/08, B23K 26/38, B23Q 1/44

(54) **PROCÉDÉ DE DÉCOUPAGE DE PIÈCES DANS UNE BANDE DE MATIÈRE ET MACHINE DE DÉCOUPAGE METTANT EN OEUVRE LEDIT PROCÉDÉ**
VERFAHREN UND VORRICHTUNG ZUM ABSCHNEIDEN VON TEILEN AUS EINEM MATERIALBAND
METHOD AND DEVICE FOR CUTTING PARTS FROM BAND OF MATERIAL

(30) Priorité: 11.02.2013 FR 1351128
(43) Date de publication de la demande: 16.12.2015
(73) Titulaire: Dimeco Alipresse S.A.S., 25480 Pirey (FR)
(72) Inventeur: AUBRY, Marc, 25115 Pouilly Les Vignes (FR)
(74) Mandataire: Koelbel, Caroline
(86) Numéro de dépôt international: PCT/IB2014/000145
(87) Numéro de publication internationale: WO 2014/122524

(56) Documents cités:
- EP-A1- 1 586 407
- EP-A1- 2 420 344
- WO-A1-97/08376
- WO-A1-2010/140071
- FR-A1- 2 532 217

## Description

La présente invention concerne un procédé de découpage de pièces dans une bande de matière enroulée en bobine, dans lequel on déroule en continu ladite bande de matière pour la faire défiler dans un même sens d'avancement à une vitesse prédéterminée, on découpe lesdites pièces au fur et à mesure de l'avancement continu de ladite bande de matière au moyen d'une tête de découpe déplacée linéairement dans un plan orthonormé parallèle à ladite bande de matière, selon un axe transversal et selon un axe longitudinal correspondant au sens d'avancement de ladite bande de matière, les deux déplacements linéaires étant combinés pour déplacer ladite tête de découpe selon une trajectoire quelconque contenue dans ledit plan orthonormé, et on évacue lesdites pièces après découpage.

L'invention concerne également une machine de découpage mettant en oeuvre ledit procédé et comportant un châssis pourvu d'une zone de découpe agencée pour recevoir ladite bande de matière, une tête de découpe portée par un support mobile agencé pour déplacer ladite tête de découpe linéairement dans un plan orthonormé parallèle à ladite zone de découpe, selon un axe transversal et selon un axe longitudinal correspondant au sens d'avancement de la bande de matière, une zone d'alimentation disposée en amont de ladite zone de découpe et une zone d'évacuation disposée en aval de ladite zone de découpe, ladite zone d'alimentation comportant au moins un rouleau motorisé couplé à un actionneur agencé pour faire avancer ladite bande de matière dans un même sens d'avancement à une vitesse prédéterminée, ledit support mobile étant monté en translation sur une poutre longitudinale fixée audit châssis et parallèle audit axe longitudinal, et ledit support mobile comportant un premier actionneur agencé pour déplacer ladite tête de découpe linéairement dans ledit axe longitudinal.

### Technique antérieure :

Les machines de découpage pour métaux en bande enroulée sur une bobine sont basées sur l'association d'une ligne de déroulage et d'une table de découpe sur laquelle la bande de matière est introduite par séquences bien distinctes. Dans une première configuration de machine, la tête de découpage a un mouvement longitudinal et transversal qui couvre la surface de la table de découpe pour effectuer des découpages selon des profils quelconques. Le procédé de découpage consiste à dérouler une longueur de bande de matière pour alimenter la table de découpe, à arrêter le déroulement de la bande de matière, puis à réaliser lé découpage des pièces sur un tronçon de bande fixe. Ensuite, les pièces découpées sont évacuées soit par l'avance de la bande de matière pour le cycle suivant, soit par préhension directe des pièces à la verticale de la table de découpe par un manipulateur. Cette première configuration de machine impose de travailler en mode discontinu entre les phases d'avance, de découpage et de déchargement. Ce mode discontinu engendre ainsi des temps de cycle complet longs du fait des phases de déchargement et d'avance pour le cycle suivant. Les publications WO 2010/140071 et EP 1 584 407 illustrent des exemples de machine de découpage dans lesquels le défilement de la bande de matière est intermittent.

Dans une seconde configuration de machine, on combine l'avance en continu de la bande de matière avec le découpage des pièces. La publication FR 2 807 683 montre un premier exemple de machine dans laquelle la tête de découpage se déplace exclusivement perpendiculairement à l'avance de la bande de matière pour couvrir la largeur de la bande de matière. Dans cette configuration, les rouleaux d'alimentation de la bande de matière se déplacent d'avant en arrière pour pouvoir découper des pièces selon des contours quelconques. Cette machine nécessite par conséquent une zone tampon pour absorber les mouvements de va et vient de la bande de matière sans tension. Dans cette seconde configuration de machine, le recul de la bande de matière implique entre autre la recirculation de la bande partiellement découpée dans les rouleaux d'alimentation. L'opération de découpage génère des particules métalliques qui viennent polluer cette zone d'alimentation et endommagent les pièces produites. De plus, ce mode de fonctionnement en va et vient est préjudiciable pour les parties mécaniques en mouvement et les moteurs puisqu'il nécessite un fonctionnement fortement cadencé source de fatigue mécanique prématurée. Ce procédé continu n'est donc pas satisfaisant.

La publication EP 2 420 344 montre un deuxième exemple de machine combinant l'avance en continu, dans un même sens et à vitesse constante de la bande dé matière avec le découpage des pièces. Toutefois, le découpage des pièces s'effectue avec trois têtes de découpe à faisceau laser, chacune mobile dans un plan orthonormé XY et chacune définissant une zone de travail, de sorte que les trois zones de travail se chevauchent partiellement pour couvrir la largeur de la bande de matière. De plus, le convoyeur est scindé en trois convoyeurs parallèles, correspondant aux trois zones de découpe, définissant chacun une couverture disposée au droit des têtes de découpe et déplacée simultanément pour permettre le passage du faisceau laser. Cette configuration est contraignante, complexe, onéreuse et n'offre pas la souplesse recherchée dans l'exécution de tout type de pièces.

La publication FR 2 532 217 propose un appareil de perforation par faisceau laser équipé d'un capteur de vitesse du défilement de la bande de matière pour piloter le faisceau laser et imposer un pas constant de la répétition des découpes ainsi qu'une forme des découpes identique. Cette configuration de machine de découpe n'autorise aucune flexibilité dans le pilotage de la tête de découpe et de la bande de matière permettant de découper tout type de pièces, et génère des déchets de matière. première importants.

Enfin la publication WO 97/08376 décrit une ancienne technique de découpage par faisceau laser déplacé au moyen de miroirs mobiles pour le découpage de pièces identiques selon un patron prédéfini. Le pilotage des miroirs mobiles est une technologie très délicate à maîtriser et non adaptée à une production industrielle à couts maîtrisés, qui doit répondre à une grande flexibilité et une grande réactivité permettant de découper tout type de pièces à la demande.

### Exposé de l'invention :

La présente invention vise à apporter une solution aux problèmes évoqués ci-dessus en proposant un procédé de découpage performant et rapide, flexible et offrant des gains de productivité, combinant l'avance en continu de la bande de matière toujours dans un même sens et le découpage des pièces selon des contours quelconques au fur et à mesure de cette avance, procédé dans lequel les pièces peuvent être imbriquées dans la largeur de la bande pour réduire sensiblement les déchets de matière première ainsi que la longueur de la machine de découpage, permettant ainsi d'obtenir une machine plus compacte, d'un coût de fabrication réduit, pouvant s'intégrer aisément dans une ligne de production automatique de découpage de pièces à plat dans une bande de matière conditionnée en bobine.

Dans ce but, l'invention concerne un procédé de découpage du genre indiqué en préambule, dans lequel la course de déplacement de ladite tête de découpe dans l'axe transversal couvre la largeur de la bande de matière, dans lequel l'on déterminée la trajectoire de la tête de découpe en fonction du contour desdites pièces à découper pour imbriquer lesdites pièces à découper dans la largeur de la bande de matière, et dans lequel l'on synchronise la vitesse de déplacement de ladite tête de découpe et la vitesse d'avancement de ladite bande de matière en fonction de ladite trajectoire déterminée de la tête de découpe.

D'une manière préférentielle, la course de déplacement de ladite tête de découpe dans l'axe longitudinal délimite la longueur d'une zone de découpe dans laquelle s'effectue l'opération de découpage de la bande de matière pendant son défilement. en continu.

La vitesse d'avancement de ladite bande de matière est de préférence continue et modulée en fonction du contour des pièces à découper.

Dans ce but également, l'invention concerne une machine de découpage du genre indiqué en préambule, dans laquelle ledit support mobile comporte un second actionneur agencé pour déplacer ladite tête de découpe linéairement dans ledit axe transversal couvrant la largeur de la bande de matière, et dans laquelle ladite machine comporte en outre une unité centrale de commande agencée pour asservir lesdits actionneurs afin de déplacer ladite tête de découpe dans ladite zone de découpe sur une trajectoire quelconque contenue dans la zone de découpe, ladite trajectoire étant déterminée en fonction du contour des pièces à découper pour imbriquer lesdites pièces à découper dans la largeur de la bande de matière, et le déplacement de ladite tête de découpe étant synchronisée avec la vitesse d'avancement de ladite bande de matière.

Dans une première forme de réalisation, le support mobile comporte un mécanisme à géométrie variable. Ce mécanisme à géométrie variable peut comporter d'une part un bras rigide portant à une première extrémité ladite tête de découpe et à une seconde extrémité un pivot libre monté coulissant dans ladite poutre longitudinale, et d'autre part un bras motorisé présentant une longueur égale à la moitié de la longueur dudit bras rigide, dont une première extrémité est couplée à un point central dudit bras rigide par une articulation et une seconde extrémité est couplée audit second actionneur, ladite seconde extrémité du bras motorisé étant solidaire d'un chariot horizontal monté en translation sur ladite poutre longitudinale et couplé audit premier actionneur.

Dans une seconde forme de réalisation, le support mobile comporte un mécanisme à géométrie fixe. Ce mécanisme à géométrie fixe peut comporter un premier chariot coulissant monté dans la poutre longitudinale et couplé au premier actionneur pour déplacer la tête de découpe dans l'axe longitudinal, et une poutre transversale perpendiculaire à la poutre longitudinale, fixée audit premier chariot et portant un second chariot coulissant couplé au second actionneur pour déplacer la tête de découpe dans l'axe transversal.

D'une manière avantageuse, la poutre longitudinale s'étend parallèlement au-dessus de ladite zone de découpe, sur au moins toute la longueur de ladite zone de découpe, et est confondue avec l'axe médian longitudinal de ladite zone de découpe. De même, le support mobile présente avantageusement une envergure telle que la tête de découpe balaie au moins toute la largeur de la zone de découpe. Dans ce cas, ladite poutre transversale présente avantageusement une longueur supérieure à la largeur de ladite zone de découpe.

La tête de découpe peut être solidaire d'un chariot vertical monté en translation sur une extrémité dudit support mobile et couplé à un troisième actionneur agencé pour déplacer ladite tête de découpe perpendiculairement à ladite zone de découpe. Dans ce cas, l'unité centrale de commande peut également asservir le troisième actionneur pendant l'opération de découpage.

La machine de découpage peut comporter au moins un capteur de mesure agencé pour communiquer en temps réel à ladite unité centrale de commande au moins la position et la vitesse d'avancement de ladite bande de matière, ce capteur de mesure pouvant être constitué d'une roue de mesure disposée en contact roulant sur ladite bande de matière en amont de ladite zone d'alimentation.

Cette machine est avantageusement complétée par des moyens de guidage latéral de ladite bande de matière disposés en amont de ladite zone d'alimentation.

### Description sommaire des dessins :

La présente invention et ses avantages apparaîtront mieux dans la description suivante d'un mode de réalisation donne à titre d'exemple non limitatif, en référence aux dessins annexés, dans lesquels:
- la figure 1 représente une vue de face d'une ligne de production de pièces découpées à partir d'une bande de matière conditionnée en bobine jusqu'à l'évacuation desdites pièces après découpage,
- la figure 2 est une vue en perspective du détail II de la figure 1 montrant la zone d'alimentation et la zone de découpe de la machine de découpage selon l'invention,
- la figure 3 est une vue de dessus de la zone de découpe de la figure 2,
- la figure 4 est une vue de face de la zone de découpage de la figure 2,
- la figure 5 est un schéma de principe de la cinématique du support mobile portant la tête de découpe selon l'invention,
- la figure 6 est une vue de dessus d'un tronçon de bande de matière à différentes étapes d'avancement dans la zone de découpe,
- la figure 7 est un organigramme de la mise en oeuvre du procédé de découpage selon l'invention,
- la figure 8 est un schéma de principe de la cinématique du support mobile portant la tête de découpe selon une variante de réalisation de l'invention, et
- la figure 9 est une vue de dessous simplifiée du support mobile de la figure 8.

### Illustrations de l'invention et différentes manières de la réaliser:

La présente invention peut s'appliquer à différentes techniques de découpage notamment le découpage thermique par oxycoupage, au plasma, au laser ou similaire. La technique de découpage au laser est certes la plus répandue car elle permet d'obtenir une découpe rapide, de grande précision de l'ordre du 1/10^{e} de millimètre, avec un équipement relativement économique. Par découpage, on entend aussi bien la découpe que le perçage de pièces. De même, le découpage n'est pas limitée aux pièces métalliques, mais s'étend à toute autre pièce découpée dans une bande de matière conditionnée en bobine, telle qu'une matière tissée, non-tissée, synthétique, composite, en bois, carton, papier ou similaire.

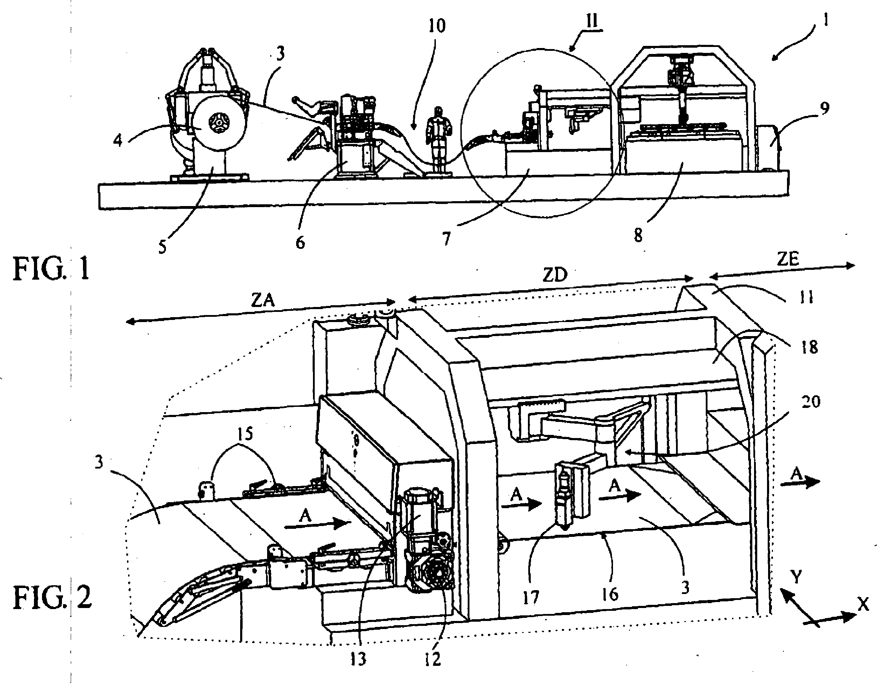

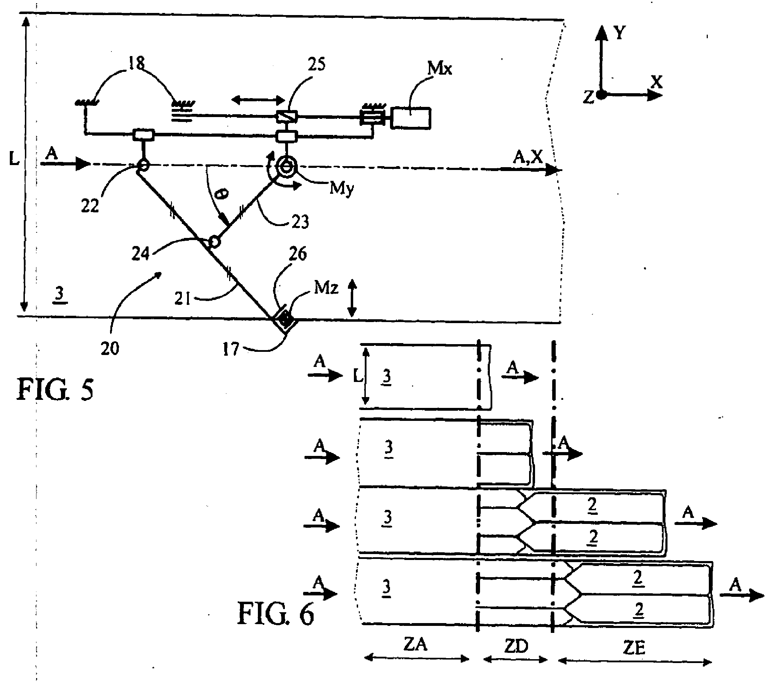

La figure 1 montre un exemple de ligne de production 1 complète permettant la fabrication de pièces 2 (cf. fig. 6) découpées à plat dans une bande de matière 3 conditionnée en bobine 4. A cet effet, la ligne de production 1 comporte une machine de déroulage 5 agencée pour porter la bobine 4 et dérouler en continu la bande de matière 3 de la bobine 4, suivie d'une machine de redressage 6 agencée pour redresser la bande de matière 3 avant son entrée dans une machine de découpage 7 agencée pour découper des pièces 2 selon un contour défini. Selon, le cas, il est possible de combiner emboutissage et découpage thermique en rajoutant un poste d'emboutissage. Une machine de déchargement 8 peut être prévue en sortie de ligne pour évacuer et conditionner les pièces 2 après découpage. Une unité centrale de commande 9 permet de programmer et de piloter l'ensemble de la ligne de production. Pour garantir une alimentation continue et sans contrainte de la machine de découpage 7, la ligne de production 1 est prévue avec une zone tampon 10 disposée entre la machine de redressage 6 et la machine de découpage 7 dans laquelle la bande de matière 3 forme une boucle plus ou moins haute, libre et sans tension.

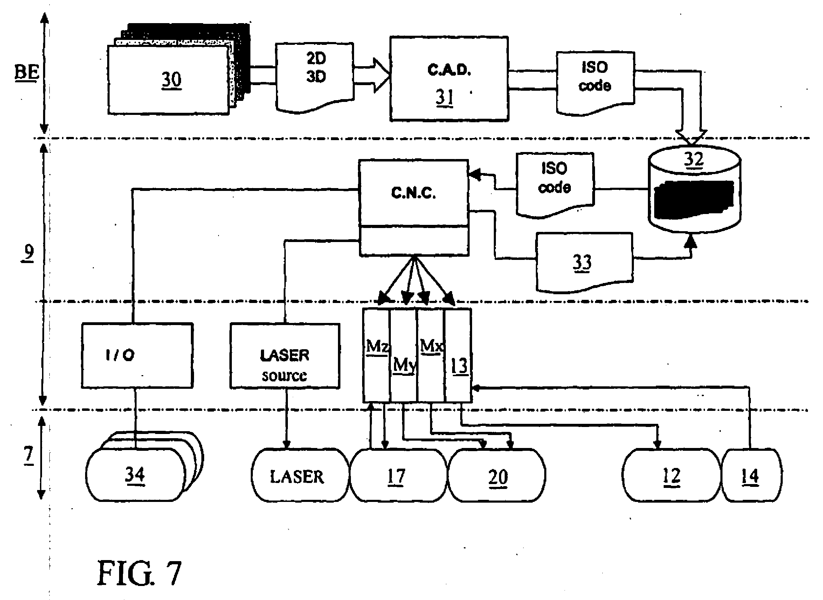

La présente invention porte principalement sur la machine de découpage 7 qui est conçue pour découper les pièces 2 au fur et à mesure de l'avancement continu de la bande de matière 3, le découpage étant réalisé de préférence par un procédé thermique. A cet effet, elle comporte un châssis II portant, dans le sens d'avancement de la bande de matière 3, une zone d'alimentation ZA, une zone de découpe ZD et une zone d'évacuation ZE, qui peut être confondue avec la machine de déchargement 8. La zone d'alimentation ZA comporte par exemple deux rouleaux d'entraînement 12 superposés, dont un rouleau motorisé et un rouleau presseur, le rouleau motorisé étant couplé à un actionneur rotatif 13 asservi par l'unité centrale de commande 9 pour alimenter la bande de matière 3 à une vitesse de défilement continue dans le sens d'avancement représenté par les flèches A. Un capteur de mesure 14 (cf. figure 7), par exemple sous la forme d'une roue de codage qui route sur la bande de matière 3, est prévu en amont des rouleaux d'entraînement 12 et est agencé pour communiquer en temps réel la position et la vitesse de défilement de la bande de matière 3 à l'unité centrale de commande 9 en vue d'asservir en temps réel les actionneurs associés à la tête de découpe pour optimiser sa trajectoire et son déplacement comme décrit plus loin. Des moyens de guidage 15 sont prévus en amont des rouleaux d'entraînement 12 pour guider la bande de matière 3 latéralement avant son entrée dans la zone de découpe ZD et garantir ainsi son positionnement axial précis et par conséquent une découpe de grande précision.

La zone de découpe ZD comporte une table de travail 16 agencée pour transporter de façon synchrone, librement et sans glissement la bande de matière 3 pendant son défilement en continu. Cette table de travail 16 peut comporter des picots ou similaires assurant le transport de la bande de matière 3 et peut être ajourée ou perforée pour permettre l'évacuation par aspiration des poussières, des particules de métal en fusion et/ou des fumées liées à l'opération de découpage. A cet effet, la table de travail 16 est raccordée à une centrale d'aspiration (non représentée).

La zone de découpe ZD comporte une tête de découpe 17 portée par un support mobile 20, 40 monté en translation sur une poutre longitudinale 18 solidaire du châssis 11. Cette poutre longitudinale 18 d'axe X s'étend parallèlement au-dessus de la zone de découpe ZD et de préférence dans son axe médian parallèle au sens d'avancement A de la bande de matière 3. Elle porte un premier actionneur Mx agencé pour déplacer linéairement le support mobile 20, 40 et donc la tête de découpe 17 suivant un axe longitudinal X, dans un repère orthonormé XYZ, parallèle au sens d'avancement A de la bande de matière 3.

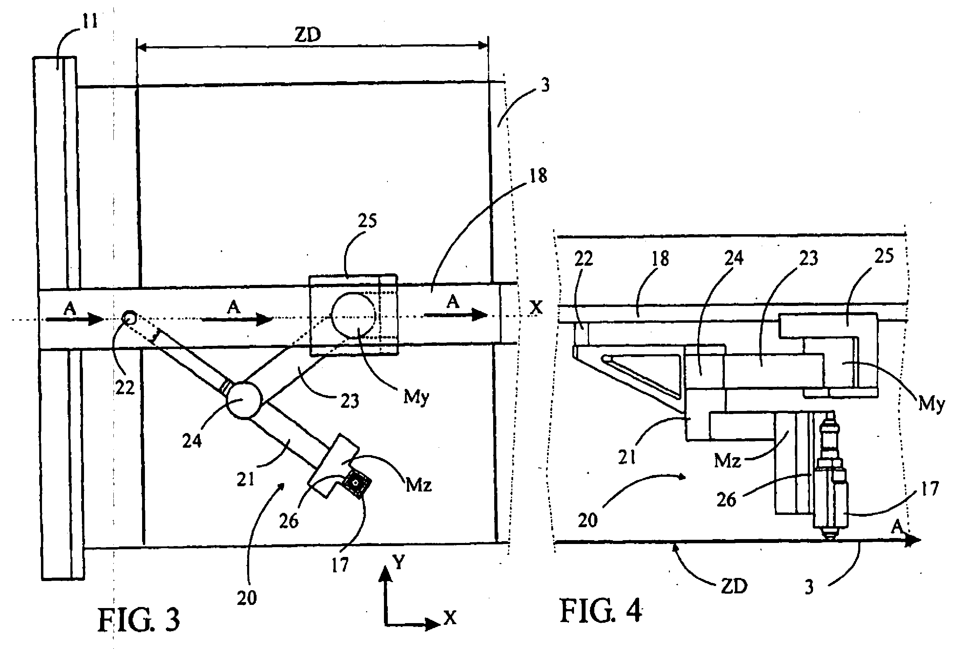

Ce support mobile 20 comporte, selon une première forme de réalisation illustrée aux figures 2 à 5, un mécanisme à géométrie variable couplé à un second actionneur My agencé pour déplacer la tête de découpe 17 dans un axe transversal Y perpendiculaire à l'axe longitudinal X. Ce mécanisme à géométrie variable, comporte d'une part un bras rigide 21 portant à une première extrémité la tête de découpe 17 et à une seconde extrémité un pivot 22 monté librement coulissant dans la poutre longitudinale 18 selon un axe longitudinal X, et d'autre part un bras motorisé 23 d'une longueur égale à la moitié de la longueur du bras rigide 21, couplé à une première extrémité à un point central du bras rigide 21 par une articulation 24 et à une seconde extrémité au second actionneur My. La variation de l'angle θ que forme le bras motorisé 23 avec l'axe longitudinal X du fait de la rotation de l'actionneur My engendre le déplacement linéaire de la tête de découpe 17 dans un axe transversal Y du fait de l'égalité de la longueur des bras de levier constituant ledit mécanisme à géométrie variable. Plus précisément, la longueur du bras motorisé 23 est égale à la longueur du demi bras rigide 21 s'étendant entre le pivot 22 et l'articulation 24 et à la longueur du demi bras rigide 21 s'étendant entre l'articulation 24 et la tête de découpe 17. Ainsi, la combinaison des deux actionneurs Mx et My permet de déplacer la tête de découpe 17 selon des trajectoires quelconques dans un plan XY parallèle à la zone de découpe ZD. Dans ce but, la longueur du bras rigide 21, de même que la longueur de la poutre longitudinale 18, sont déterminées de telle sorte que la course de la tête de découpe 17 aussi bien dans l'axe transversal Y que dans l'axe longitudinal X soit suffisante pour balayer toute la surface de la zone de découpe ZD. Notamment la course transversale du bras rigide 21 couvre toute la largeur L de la bande de matière 3 pour optimiser au maximum l'utilisation de la bande de matière 3 et réduire les déchets de matière première.

Le second actionneur My peut être un moteur entraînant directement la seconde extrémité du bras motorisé 23 en rotation par un couplage positif ou similaire. Cette seconde extrémité du bras motorisé 23 est par ailleurs solidaire d'un chariot horizontal 25 monté en translation dans la poutre longitudinale 18 et couplé audit premier actionneur Mx. Cet actionneur Mx peut, comme dans le schéma de principe illustré à la figure 5, être un moteur entraînant en translation le chariot horizontal 25 par une transmission du type pignon/crémaillère, vis sans: fin/écrou, ou similaire. Bien entendu toute autre transmission ou actionneur peut convenir tel qu'un vérin ou similaire.

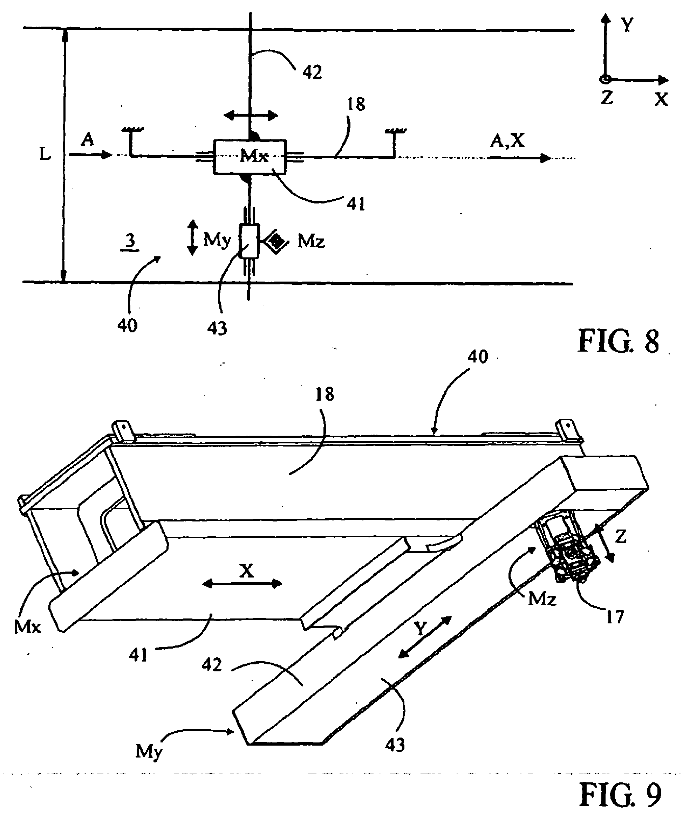

Ce support mobile 40 peut également comporter, selon une seconde forme de réalisation illustrée aux figures 8, et 9, un mécanisme à géométrie fixe comportant un second actionneur My agencé pour déplacer la tête de découpe 17 dans un axe transversal Y perpendiculaire à l'axe longitudinal X. Ce mécanisme à géométrie fixe comporte un premier chariot coulissant 41 monté dans la poutre longitudinale 18 et couplé à l'actionneur Mx pour déplacer la tête de découpe 17 dans l'axe longitudinal X. Il comporte en outre une poutre transversale 42, perpendiculaire à la poutre longitudinale 18, fixée au premier chariot coulissant 41 et portant un second chariot coulissant 43 l couplé à l'actionneur My pour déplacer la tête de découpe 17 dans l'axe transversal Y. Ainsi, la combinaison des deux actionneurs Mx et My permet de déplacer la tête de découpe 17 selon des trajectoires quelconques dans un plan XY parallèle à la zone de découpe ZD. Dans ce but, la longueur de la poutre transversale 42, de même que la longueur de la poutre longitudinale 18, sont déterminées de telle sorte que la course de la tête de découpe 17 aussi bien dans l'axe transversal Y que dans l'axe longitudinal X soit suffisante pour balayer toute la surface de la zone de découpe ZD. Pour cette raison, la longueur de la poutre transversale 42 déborde de part et d'autre de la largeur L de la bande de matière 3 pour que la course transversale du second chariot coulissant 42 couvre toute la largeur L de la bande de matière 3 permettant d'optimiser au maximum l'utilisation de la bande de matière 3 et réduire les déchets de matière première. Cette seconde forme de réalisation a l'avantage d'être plus simple mécaniquement.

Les premier et second actionneurs Mx, My sont avantageusement des moteurs linéaires permettant un pilotage précis et rapide des chariots coulissants 41, 42 sans transmission mécanique. Dans ce cas, les poutres longitudinale 18 et transversale 42 forment les stators et les chariots coulissants 41, 42 forment les rotors. Bien entendu, tout autre actionneur peut convenir tel que des moteurs rotatifs entraînant en translation respectivement les premier et second chariots coulissants 41, 42 par une transmission du type pignon/crémaillère, vis sans fin/écrou, ou similaire, des vérins ou similaire.

La tête de découpe 17 est en outre solidaire d'un chariot vertical 26 monté en translation selon un axe vertical Z à la première extrémité du bras rigide 21. Il est couplé à un troisième actionneur Mz agencé pour déplacer la tête de découpe 17 perpendiculairement à la zone de découpe ZD. Cet actionneur Mz peut être un moteur entraînant en translation le chariot vertical 26 par une transmission du type pignon/crémaillère, vis sans fin/écrou, ou tout autre moyen équivalent.

L'unité centrale de commande 9 permet donc d'asservir ces trois actionneurs Mx, My, Mz en combinaison et synchronisés avec l'actionneur 13 de la zone d'alimentation ZA pour déplacer la tête de découpe 17 sur une trajectoire en deux ou en trois dimensions lui permettant de réaliser, au fur et à mesure de l'avancement continu de la bande de matière 3, le contour des pièces 2 à découper dans la largeur de la bande de matière 3. La découpe peut, selon le contour à réaliser, se faire en continu ou en reprise. Les actionneurs utilisés peuvent être des servomoteurs permettant une réponse rapide et très précise.

La conception originale de la machine de découpage 17 selon l'invention permet d'imbriquer les pièces 2 à découper dans la largeur de la bande de matière 3 dans un objectif d'économie de matière première et de gains de productivité. La figure 6 permet d'illustrer un exemple d'imbrication de pièces 2 à découper ainsi que l'évolution de l'opération de découpage à différents stades d'avancement de la bande de matière 3 dans le sens A. Cette figure 6 présente en vue de dessus une bande de matière 3 à quatre stades d'avancement. En partant du haut de la figure 6, au premier stade d'avancement, la bande de matière 3 arrive de la zone d'alimentation ZA dans la zone de découpe ZD. Au deuxième stade d'avancement, la tête de découpe 17 commence son travail de découpage sur le tronçon de bande de matière 3 qui entre dans la zone de découpe ZD. Au troisième stade d'avancement, la tête de découpe 17 poursuit son travail de découpage au fur et à mesure que la bande de matière 3 traverse la zone de découpe ZD en imbriquant les contours des pièces 2 à découper pour optimiser l'utilisation de la matière première, et la bande de matière 3 entre dans la zone d'évacuation ZE. Au quatrième stade d'avancement, la tête de découpe 17 poursuit son travail de découpage au fur et à mesure que la bande de matière 3 traverse la zone de découpe ZD et les premières pièces 2 découpées ont quitté la zone de découpe ZD et sont situées dans la zone d'évacuation ZE où elles peuvent être prélevées par tout moyen connu manuel, semi-automatique, automatique tel qu'un bras robotisé. Les déchets résiduels sont évacués en même temps que les pièces 2 découpées.

La figure 7 représente sous la forme d'un organigramme les étapes du processus industriel permettant de réaliser des pièces 2 découpées à partir de plans de fabrication 30 conçus au stade d'un bureau d'études BE en deux dimensions 2D ou en trois dimensions 3D au moyen d'outils informatiques 31 de conception assistée par ordinateur (CAO). Ces plans de fabrication 30 sont codifiés et mémorisés dans un serveur 32. Ils sont ensuite transformés en fichiers 33 exploitables par un ordinateur CNC pour la commande numérique des actionneurs Mx, My, Mz et 13 de la machine de découpage 7, cet ordinateur étant intégré à l'unité centrale de commande 9. Cet ordinateur CNC va également commander le fonctionnement de l'outil de découpage en fonction de la découpe à réaliser, par exemple un faisceau laser, ainsi que les autres équipements 34 de la machine de découpage 7 comme l'aspiration. Des capteurs permettent de renseigner l'ordinateur CNC en temps réel de certaines données de la machine de découpage 7 pour optimiser l'asservissement et la synchronisation des actionneurs, telles que la vitesse d'avancement de la bande de matière 3 par un capteur de mesure 14, la position verticale de la tête de découpe 17, etc.

### Possibilités d'application industrielle :

La machine de découpage 7 selon l'invention s'intègre parfaitement dans une ligne de production industrielle de pièces découpées à plat. Elle s'applique à toutes les techniques de découpage notamment thermique, et permet d'atteindre les buts fixes, à savoir une machine capable de découper des pièces dans une bande de matière défilant à une vitesse continue, toujours dans le même sens, cette machine étant compacte, économique, ne nécessitant que deux actionneurs Mx et My pour réaliser la découpe des pièces dans le plan défini par la zone de découpe ZD, offrant une grande précision de coupe, une grande flexibilité de coupe permettant même un travail à façon, pour un rendement optimisé, avec une réduction sensible des déchets de matière première.

La présente invention n'est pas limitée aux exemples de réalisation décrits mais s'étend à toute modifcation et variante évidentes pour un homme du métier tout en restant dans l'étendue de la protection définie dans les revendications annexées.

## Revendications

1. Procédé de découpage de pièces (2) dans une bande de matière (3) enroulée en bobine, procédé dans lequel on déroule en continu ladite bande de matière (3) pour la faire défiler dans un même sens d'avancement (A) à une vitesse prédéterminée, on découpe lesdites pièces au fur et à mesure de l'avancement continu de ladite bande de matière au moyen d'une tête de découpe (17) déplacée linéairement dans un plan orthonormé (XY) parallèle à ladite bande de matière, selon un axe transversal (Y) et selon un axe longitudinal (X) correspondant au sens d'avancement (A) de ladite bande de matière, les deux déplacements linéaires (X-Y) étant combinés pour déplacer ladite tête de découpe (17) selon une trajectoire quelconque contenue dans ledit plan orthonormé (XY), et on évacue lesdites pièces après découpage, **caractérisé en ce que** la course de déplacement de ladite tête de découpe (17) dans l'axe transversal (Y) couvre la largeur (L) de la bande de matière, **en ce que** l'on détermine la trajectoire de - la tête de découpe (17) en fonction du contour desdites pièces (2) à découper pour imbriquer lesdites pièces (2) à découper dans la largeur (L) de la bande de matière (3), **en ce que** l'on synchronise la vitesse de déplacement de ladite tête de découpe (17) et la vitesse d'avancement de ladite bande de matière (3) en fonction de ladite trajectoire déterminée de la tête de découpe (17), et **en ce que** la vitesse d'avancement de ladite bande de matière (3) est continue et modulée en fonction du contour des pièces (2) à découper.

2. Procédé selon la revendication 1, **caractérisé en ce que** la course de déplacement de ladite tête de découpe (17) dans l'axe longitudinal (X) délimite une zone de découpe (ZD) dans laquelle s'effectue l'opération de découpage de la bande de matière (3) pendant son défilement en continu.

3. Machine de découpe (17) mettant en oeuvre le procédé de découpe selon l'une quelconque des revendications précédentes, ladite machine comportant un châssis (11) pourvu d'une zone de découpe (ZD) agencée pour recevoir ladite bande de matière (3), une tête de découpe (17) portée par un support mobile (20, 40) agencé pour déplacer ladite tête de découpe (17) linéairement dans un plan orthonormé parallèle à ladite zone de découpe (ZD), selon un axe transversal (Y) et selon un axe longitudinal (X) correspondant au sens d'avancement (A) de la bande de matière, une zone d'alimentation (ZA) de la bande de matière (3) disposée en amont de ladite zone de découpe et une zone d'évacuation (ZE) des pièces (2) découpées disposée en aval de ladite zone de découpe, ladite zone d'alimentation (ZA) comportant au moins un rouleau motorisé (12) couplé à un actionneur (13) agencé pour faire avancer ladite bande de matière (3) dans un même sens d'avancement (A) à une vitesse prédéterminée, ledit support mobile (20, 40) étant monté en translation sur une poutre longitudinale (18) fixée audit châssis (11) et parallèle audit axe longitudinal (X), et ledit support mobile (20, 40) comportant un premier actionneur (Mx) agencé pour déplacer ladite tête de découpe (17) linéairement dans ledit axe longitudinal (X), **caractérisée en ce que** ledit support mobile (20, 40) comporte en outre un second actionneur (My) agencé pour déplacer ladite tête de découpe (17) linéairement dans ledit axe transversal (Y) couvrant la largeur (L) de la bande de matière (3), et **en ce que** ladite machine comporte en outre une unité centrale de commande (9) agencée pour asservir lesdits actionneurs (13, Mx, My) afin de déplacer ladite tête de découpe (17) dans ladite zone de découpe (ZD) sur une trajectoire quelconque contenue dans ladite zone de découpe (ZD), ladite trajectoire étant déterminée en fonction du contour des pièces (2) à découper pour imbriquer lesdites pièces (2) à découper dans la largeur (L) de la bande de matière (3), et le déplacement de ladite tête de découpe (17) étant synchronisée avec la vitesse d'avancement de ladite bande de matière (3) laquelle est continue et modulée en fonction du contour des pièces (2) à découper.

4. Machine selon la revendication 3, **caractérisée en ce que** ledit support mobile (20) comporte un mécanisme à géométrie variable.

5. Machine selon la revendication 4, **caractérisée en ce que** ledit mécanisme à géométrie variable du support mobile (20) comporte d'une part un bras rigide (21) portant à une première extrémité ladite tête de découpe (17) et à une seconde extrémité un pivot libre (22) monté coulissant dans ladite poutre longitudinale (18), et d'autre part un bras motorisé (23) présentant une longueur égale à la moitié de la longueur dudit bras rigide (21), dont une première extrémité est couplée à un point central dudit bras rigide (21) par une articulation (24) et une seconde extrémité est couplée audit second actionneur (My), et **en ce que** ladite seconde extrémité du bras motorisé (23) est solidaire d'un chariot horizontal (25) monté en translation sur ladite poutre longitudinale (18) et couplé audit premier actionneur (Mx).

6. Machine selon la revendication 3, **caractérisé en ce que** ledit support mobile (40) comporte un mécanisme à géométrie fixe.

7. Machine selon la revendication 6, **caractérisée en ce que** ledit mécanisme à géométrie fixe du support mobile (40) comporte un premier chariot coulissant (41) monté dans la poutre longitudinale (18) et couplé au premier actionneur (Mx) pour déplacer la tête de découpe (17) dans l'axe longitudinal (X), et une poutre transversale (42) perpendiculaire à ladite poutre longitudinale (18), fixée sur ledit premier chariot coulissant (41) et portant un second chariot coulissant (43) couplé au second actionneur (My) pour déplacer la tête de découpe (17) dans l'axe transversal (Y).

8. Machine selon l'une quelconque des revendications 3 à 7, **caractérisée en ce que** ladite poutre longitudinale (18) s'étend parallèlement au-dessus de ladite zone de découpe (ZD), sur au moins toute la longueur de ladite zone de découpe (ZD), et est confondue avec l'axe médian longitudinal de ladite zone de découpe (ZD).

9. Machine selon la revendication 8, **caractérisée en ce que** ledit support mobile (20, 40) présente une envergure telle que la tête de découpe (17) balaie au moins toute la largeur (L) de ladite zone de découpe.

10. Machine selon la revendication 9, **caractérisée en ce que** ladite poutre transversale (42) présente une longueur supérieure à la largeur (L) de ladite zone de découpe.

11. Machine selon la revendication 3, **caractérisée en ce que** la tête de découpe (17) est solidaire d'un chariot vertical (26) monté en translation sur une extrémité dudit support mobile (20, 40) et couplé à un troisième actionneur (Mz) agencé pour déplacer ladite tête de découpe (17) perpendiculairement à ladite zone de découpe (ZD), et **en ce que** ladite unité centrale de commande (9) asservit également ledit troisième actionneur (Mz) pendant l'opération de découpage.

12. Machine selon la revendication 3, **caractérisée en ce qu'**elle comporte au moins un capteur de mesure (14) agencé pour communiquer en temps réel à ladite unité centrale de commande (9) au moins la position et la vitesse d'avancement de ladite bande de matière (3).

13. Machine selon la revendication 12, **caractérisée en ce que** ledit capteur de mesure est constitué d'une roue de mesure disposée en contact roulant sur ladite bande de matière (3) en amont de ladite zone d'alimentation (ZA).

14. Machine selon la revendication 3, **caractérisée en ce qu'**elle comporte des moyens de guidage latéral (15) de ladite bande de matière (3) disposés en amont de ladite zone d'alimentation (ZA).

## Patentansprüche

1. Verfahren zum Abschneiden von Teilen (2) aus einem auf einer Spule aufgerollten Materialband (3), Verfahren in dem man besagtes Materialband (3) kontinuierlich abrollt, um es mit einer vorbestimmten Geschwindigkeit in eine selbe Vorschubrichtung (A) laufen zu lassen, man besagte Teile während des kontinuierlichen Vorschubs von besagtem Materialband mit einem Schneidkopf (17) abschneidet, der linear in einer orthonormierten, zu besagtem Materialband parallelen Ebene (XY), auf einer Querachse (Y) und auf einer der Vorschubrichtung (A) von besagtem Materialband entsprechenden Längsachse (X) bewegt wird, wobei beide Linearbewegungen (X-Y) kombiniert werden, um besagten Schneidkopf (17) auf einer beliebigen, in besagter orthonormierten Ebene (XY) enthaltenen Bahn zu verfahren, und man besagte Teile nach dem Abschneiden ausschleust, **dadurch gekennzeichnet, dass** der Verfahrweg von besagtem Schneidkopf (17) in Querachse (Y) die Breite (L) des Materialbands abdeckt, dadurch, dass man die Bahn des Schneidkopfs (17) in Abhängigkeit der Kontur von besagten auszuschneidenden Teilen (2) bestimmt, um besagte auszuschneidende Teile (2) in der Breite (L) von Materialband (3) zu verschachteln, dadurch, dass man die Bewegungsgeschwindigkeit von besagtem Schneidkopf (17) und die Vorschubgeschwindigkeit von besagtem Materialband (3) gemäß besagter für Schneidkopf (17) bestimmten Bahn synchronisiert, und dadurch, dass die Vorschubgeschwindigkeit von besagtem Materialband (3) kontinuierlich ist und gemäß Kontur der abzuscheidenden Teile (2) moduliert wird.

2. Verfahren nach Anspruch 1, **dadurch gekennzeichnet, dass** der Verfahrweg von besagtem Schneidkopf (17) in Längsachse (X) einen Schneidbereich (ZD) abgrenzt, in dem der Schneidvorgang von Materialband (3) während seines kontinuierlichen Vorschubs durchgeführt wird.

3. Schneidmaschine (17), die das Schneidverfahren nach einem beliebigen der vorhergehenden Ansprüche einsetzt, wobei besagte Maschine ein Gestell (11) mit einem Schneidbereich (ZD) aufweist, der ausgelegt ist, um besagtes Materialband (3) aufzunehmen, sowie einen Schneidkopf (17), der von einem beweglichen Träger (20, 40) getragen wird, der ausgelegt ist, um besagten Schneidkopf (17) linear in einer orthonormierten, zu besagtem Schneidbereich (ZD) parallelen Ebene, auf einer Querachse (Y) und auf einer der Vorschubrichtung (A) von besagtem Materialband entsprechenden Längsachse (X) zu bewegen, einen vor besagtem Schneidbereich angeordneten Einlaufbereich (ZA) für Materialband (3) und einen nach besagtem Schneidbereich angeordneten Ausschleusbereich (ZE) für die abgeschnittenen Teile (2), wobei besagter Einlaufbereich (ZA) zumindest eine mit einem Antrieb (13) gekoppelte motorisierte Rolle (12) beträgt, um besagtes Materialband (3) mit einer vorbestimmten Geschwindigkeit in eine selbe Vorschubrichtung (A) laufen zu lassen, wobei besagter beweglicher Träger (20, 40) verfahrbar auf einem auf besagtem Gestell (11) befestigten, zu besagter Längsachse (X) parallelen Längsbalken (18) montiert ist, und wobei besagter Träger (20, 40) einen ersten Antrieb (Mx) beträgt, der angeordnet ist, um besagten Schneidkopf (17) linear in besagter Längsachse (X) zu verfahren, **dadurch gekennzeichnet, dass** besagter beweglicher Träger (20, 40) zudem einen zweiten Antrieb (My) beträgt, der angeordnet ist, um besagten Schneidkopf (17) linear in besagter Querachse (Y) zu verfahren und die gesamte Breite (L) von Materialband (3) abzudecken, und dadurch, dass besagte Maschine außerdem eine zentrale Steuereinheit (9) beträgt, die ausgelegt ist, um besagte Antriebe (13, Mx, My) an zu steuern, um besagten Schneidkopf (17) in besagtem Schneidbereich (ZD) auf einer beliebigen, in besagtem Schneidbereich (ZD) enthaltenen Bahn zu bewegen, wobei besagte Bahn in Abhängigkeit der Kontur von besagten auszuschneidenden Teilen (2) bestimmt wird, um besagte auszuschneidende Teile (2) in der Breite (L) von Materialband (3) zu verschachteln, und wobei die Bewegung von besagtem Schneidkopf (17) mit der Vorschubgeschwindigkeit von besagtem Materialband (3) gemäß Kontur von besagten auszuschneidenden Teilen (2) synchronisiert wird.

4. Maschine nach Anspruch 3, **dadurch gekennzeichnet, dass** besagter beweglicher Träger (20) einen Mechanismus mit variabler Geometrie beträgt.

5. Maschine nach Anspruch 4, **dadurch gekennzeichnet, dass** besagter Mechanismus mit variabler Geometrie des beweglichen Trägers (20) einerseits einen starren Arm (21) beträgt, der an einem ersten Ende besagten Schneidkopf (17) und an einem zweiten Ende ein in besagtem Längsbalken (18) verschiebbar montiertes freies Drehgelenk (22) trägt, und andererseits einen motorisierten Arm (23), dessen Länge gleich der Hälfte der Länge von besagtem starren Arm (21) ist, wobei ein erstes Ende über ein Gelenk (24) an einen Mittelpunkt von besagtem starren Arm (21) gekoppelt ist und ein zweites Ende an besagtem zweiten Antrieb (My) gekoppelt ist, und dadurch, dass besagtes zweites Ende des motorisierten Arms (23) an einem Horizontalschlitten (25) befestigt ist, der verschiebbar auf besagtem Längsschlitten (18) montiert und an besagtem ersten Antrieb (Mx) gekoppelt ist.

6. Maschine nach Anspruch 3, **dadurch gekennzeichnet, dass** besagter beweglicher Träger (40) einen Mechanismus mit feststehender Geometrie beträgt.

7. Maschine nach Anspruch 6, **dadurch gekennzeichnet, dass** besagter Mechanismus mit feststehender Geometrie von beweglichem Träger (40) einen ersten in Längsbalken (18) montierten Laufschlitten (41) beträgt, der an erstem Antrieb (Mx) gekoppelt ist, um Schneidkopf (17) in Längsachse (X) zu verfahren, und einen quer zu besagtem Längsbalken (18) angeordneten Querbalken (42), der auf besagtem ersten Laufschlitten (41) montiert ist und einen zweiten Laufschlitten (43) trägt, der an zweitem Antrieb (My) gekoppelt ist, um Schneidkopf (17) in Querachse (Y) zu verfahren.

8. Maschine nach einem beliebigen der Ansprüche 3 bis 7, **dadurch gekennzeichnet, dass** besagter Längsbalken (18) sich parallel über besagten Schneidbereich (ZD) auf zumindest der gesamten Länge von besagtem Schneidbereich (ZD) erstreckt und mit der LängsMittelachse von besagtem Schneidbereich (ZD) zusammenfällt.

9. Maschine nach Anspruch 8, **dadurch gekennzeichnet, dass** besagter beweglicher Träger (20,40) eine derartige Reichweite aufweist, dass Schneidkopf (17) zumindest die gesamte Breite (L) von besagtem Schneidbereich abfährt.

10. Maschine nach Anspruch 9, **dadurch gekennzeichnet, dass** besagter Querbalken (42) eine größerer Länge aufweist, als Breite (L) von besagtem Schneidbereich.

11. Maschine nach Anspruch 3, **dadurch gekennzeichnet, dass** Schneidkopf (17) auf einen Vertikalschlitten (26) montiert ist, der verschiebbar an einem Ende von besagtem beweglichen Träger (20, 40) montiert ist und an einen dritten Antrieb (Mz) gekoppelt ist, der ausgelegt ist, um besagten Schneidkopf (17) senkrecht zu besagtem Schneidbereich (ZD) zu bewegen, und dadurch, dass besagte zentrale Steuereinheit (9) während des Schneidvorgangs ebenfalls den dritten Antrieb (Mz) ansteuert.

12. Maschine nach Anspruch 3, **dadurch gekennzeichnet, dass** sie zumindest einen Mess-Sensor (14) beträgt, der ausgelegt ist, um besagter zentralen Steuereinheit (9) in Echtzeit zumindest die Position und die Vorschubgeschwindigkeit von besagtem Materialband (3) zu übertragen.

13. Maschine nach Anspruch 12, **dadurch gekennzeichnet, dass** besagter Mess-Sensor aus einem Messrad besteht, das vor besagtem Einlaufbereich (ZA) in rollender Berührung auf besagtem Materialband (3) angeordnet ist.

14. Maschine nach Anspruch 3, **dadurch gekennzeichnet, dass** sie vor besagtem Einlaufbereich (ZA) seitliche Führungsmittel (15) für besagtes Materialband (3) beträgt.

## Claims

1. Method for cutting pieces (2) from a strip of material (3) wound in a coil, method wherein one unwinds continuously said strip of material (3) to move it in a same direction of movement (A) at a predetermined speed, one cuts said pieces as said strip of material moves continuously using a cutting head (17) that is moved linearly in an orthonormal plane (XY) parallel to said strip of material, along a transversal axis (Y) and along a longitudinal axis (X) that corresponds to the direction of movement (A) of said strip of material, both linear movements (X-Y) being combined to move said cutting head (17) along any path contained in said orthonormal plane (XY), and one evacuates said parts after cutting, **characterized in that** the movement stroke of said cutting head (17) in the transversal axis (Y) covers the width (L) of the strip of material, wherein one determines the path of the cutting head (17) according to the contour of said pieces (2) to be cut so as to nest said pieces (2) to be cut in the width (L) of the strip of material (3), **in that** one synchronizes the movement speed of said cutting head (17) and the movement speed of said strip of material (3) according to said path determined for the cutting head (17), and **in that** the movement speed of said strip of material (3) is continuous and modulated according to the contour of the parts (2) to be cut.

2. Method according to claim 1, **characterized in that** the movement stroke of said cutting head (17) in the longitudinal axis (X) delimits a cutting zone (ZD) wherein the cutting operation of the strip of material (3) is carried out during its continuous movement.

3. Cutting machine (17) carrying out the cutting method according to any of the previous claims, said machine comprising a frame (11) provided with a cutting zone (ZD) arranged to receive said strip of material (3), a cutting head (17) supported by a mobile support (20, 40) arranged to move said cutting head (17) linearly in an orthonormal plane parallel to said cutting zone (ZD), along a transversal axis (Y) and along a longitudinal axis (X) that corresponds to the direction of movement (A) of the strip of material, a feed zone (ZA) of said strip of material (3) located upstream of said cutting zone and an evacuation zone (ZE) of the cut pieces (2) located downstream of said cutting zone, said feed zone (ZA) comprising at least one motorized roller (12) coupled with an actuator (13) arranged to move said strip of material (3) in a same direction of movement (A) at a predetermined speed, said mobile support (20, 40) being translatably mounted on a longitudinal beam (18) fastened onto said frame (11) and parallel to said longitudinal axis (X), and said mobile support (20, 40) comprising a first actuator (Mx) arranged to move said cutting head (17) linearly along said longitudinal axis (X), **characterized in that** said mobile support (20, 40) comprises moreover a second actuator (My) arranged to move said cutting head (17) linearly along said transversal axis (Y) covering the width (L) of the strip of material (3), and wherein said machine comprises moreover a central control unit (9) arranged to control said actuators (13, Mx, My) in order to move said cutting head (17) in said cutting zone (ZD) along any path included in said cutting zone (ZD), said path being determined according to the contour of the pieces (2) to be cut in order to nest said parts (2) to be cut in the width (L) of the strip of material (3), and the movement of said cutting head (17) being synchronized with the movement speed of said material strip (3), which is modulated according to the contour of the parts (2) to be cut.

4. Machine according to claim 3, **characterized in that** said mobile support (20) comprises a variable-geometry mechanism.

5. Machine according to claim 4, **characterized in that** said variable-geometry mechanism of mobile support (20) comprises on the one hand a rigid arm (21) that supports at a first end said cutting head (17) and at a second end a free pivot (22) that slides in said longitudinal beam (18), and on the other hand a motorized arm (23) having a length equal to half the length of said rigid arm (21) and whereof a first end is coupled to a central point of said rigid arm (21) by means of a joint (24) and a second end is coupled to said second actuator (My), said second end of the motorized arm (23) being integral with an horizontal carriage (25) translatably mounted on said longitudinal beam (18) and coupled to said first actuator (Mx).

6. Machine according to claim 3, **characterized in that** said mobile support (40) comprises a stationary-geometry mechanism.

7. Machine according to claim 6, **characterized in that** said stationary-geometry mechanism of mobile support (40) comprises a first sliding carriage (41) mounted in the longitudinal beam (18) and coupled to the first actuator (Mx) to move the cutting head (17) along the longitudinal axis (X), and a transversal beam (42) perpendicular to said longitudinal beam (18), fastened on said first sliding carriage (41) and supporting a second sliding carriage (43) coupled to the second actuator (My) to move the cutting head (17) along the transversal axis (Y).

8. Machine according to any of claims 3 to 7, **characterized in that** said longitudinal beam (18) extends parallel above said cutting zone (ZD), on at least the whole length of said cutting zone (ZD), and coincides with the longitudinal median axis of said cutting zone (ZD).

9. Machine according to claim 8, **characterized in that** said mobile support (20, 40) has such a span that the cutting head (17) covers at least the whole width (L) of said cutting zone.

10. Machine according to claim 9, **characterized in that** said transversal beam (42) has a length that exceeds the width (L) of said cutting zone.

11. Machine according to claim 3, **characterized in that** the cutting head (17) is integral with a vertical carriage (26) translatably mounted on an end of said mobile support (20, 40) and coupled to a third actuator (Mz) arranged to move said cutting head (17) perpendicularly to said cutting zone. (ZD), and **in that** said central control unit (9) also controls said third actuator (Mz) during the cutting operation.

12. Machine according to claim 3, **characterized in that** it comprises at least one measuring sensor (14) arranged to transmit in real time to said central control unit (9) at least the position and the movement speed of said strip of material (3).

13. Machine according to claim 12, **characterized in that** said measuring sensor is made of a measuring wheel positioned in rolling contact on said strip of material (3) upstream of said feed zone (ZA).

14. Machine according to claim 3, **characterized in that** it comprises lateral guiding means (15) for said strip of material (3) located upstream of said feed zone ZA).
